Europäisches Patentamt

European Patent Office

Office européen des brevets

(11) Publication number: **0 110 413**
**A2**

# (12) EUROPEAN PATENT APPLICATION

(21) Application number: 83112085.2

(22) Date of filing: 01.12.83

(51) Int. Cl.³: **G 06 F 11/22**

(30) Priority: 02.12.82 JP 211762/82

(43) Date of publication of application: 13.06.84
Bulletin 84/24

(84) Designated Contracting States: DE FR GB

(71) Applicant: **HITACHI, LTD., 6, Kanda Surugadai 4-chome Chiyoda-ku, Tokyo 100 (JP)**

(72) Inventor: **Wakai, Katsuro, 1127-18, Imaizumi, Hadano-shi (JP)**

(74) Representative: **Patentanwälte Beetz sen. - Beetz jun. Timpe - Siegfried - Schmitt-Fumian, Steinsdorfstrasse 10, D-8000 München 22 (DE)**

(54) **Complex processor system.**

(57) A complex processor system is disclosed in which maintenance and diagnosis of a central processing unit (11) is performed under the control of a service processor (13). The central processing unit includes a maintenance control processor (17) which is coupled to the service processor to receive a command and information attendant thereon from the service processor. The maintenance control processor controls the central processing unit in accordance with the command from the service processor to thereby perform the maintenance and diagnosis.

## COMPLEX PROCESSOR SYSTEM

The present invention relates to an information processing system and more particularly to a complex processor system suitable for high speed processing of maintenance and diagnosis operations.

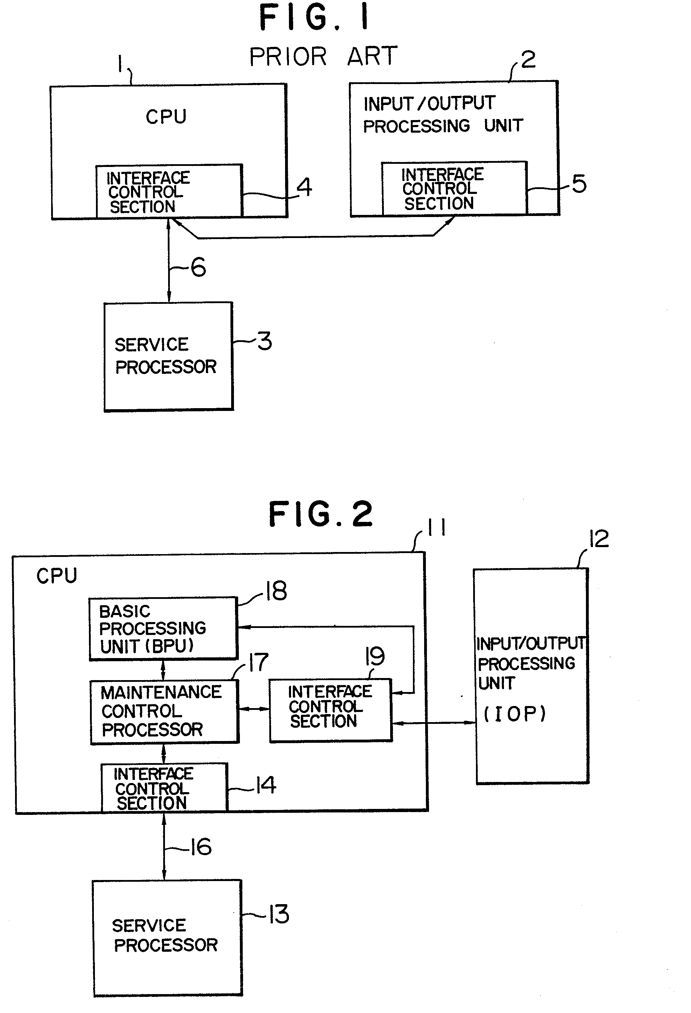

A prior art complex processor system as exemplified in Fig. 1 comprises a central processing unit (CPU) 1 including a main storage, an input/output processing unit 2 for execution of input/output operations, and a service processor 3 adapted to execute operations of an operator console and a maintenance console.

As shown in Fig. 1 in the prior art system, the CPU 1 and input/output processing unit 2 are incorporated with interface control sections 4 and 5, respectively, and the service processor 3 is coupled to the CPU 1 and the input/output processing unit 2 via the interface control sections 4 and 5, respectively. Each of the interface control sections 4 and 5 may simply be a decoder, register or the like device which is materialized with logic gates, and each time the interface control section is supplied with individual information data concerning maintenance and diagnosis operation from the service processor 3, it merely executes the information data one by one but does not execute one collective function required for the maintenance and diagnosis operation. Therefore, in order to execute one maintenance and diagnosis

0110413

operation, it is necessary that a sequence control be carried out in accordance with a program of the service processor and results of the sequence control be sent sequentially to the interface control section 4 or 5 via an interface line 6.

Incidentally, the service processor is a terminal image device with an input/output unit in the form of a CRT (cathode-ray tube)display, a key board, a printer or the like and typically, it employs, as its processor per se, a commercially available microprocessor or minicomputer. Accordingly, processing capability of the service processor is extremely inferior to that of the CPU and of the input/output processing unit and besides, the number of program steps is increased as described previously, resulting in disadvantageous prolongation of processing time for the maintenance and diagnosis operation.

An object of this invention is to provide a complex processor system which can perform maintenance and diagnosis operations based on a service processor at high speeds.

According to this invention, a maintenance control processor is provided in a CPU. The maintenance control processor is coupled to a service processor and among control operations to be executed by the service processor, operations for directly controlling the CPU are executed by the maintenance control processor in accordance with commands from the service processor. The processor dedicated to maintenance control may be materialized as part of the

CPU, and this maintenance control processor and the CPU may be realized through the same hardware technology, thereby making it possible to attain high-speed operations.

The present invention will be apparent from the following detailed description taken in conjunction with the accompanying drawings, in which:

Fig. 1 is a block diagram showing a construction of a prior art complex processor system;

Fig. 2 is a block diagram showing an overall construction of a complex processor system embodying the present invention;

Fig. 3 is a block diagram showing details of a maintenance control processor used in the system of Fig. 2; and

Figs. 4a and 4b are timing charts useful in explaining operations of the maintenance control processor shown in Fig. 3.

Referring now to Fig. 2, a preferred embodiment of a complex processor system according to the present invention will be described.  In Fig. 2, a control processing unit or CPU 11 is coupled to a service processor 13 via an interface control section 14.  The CPU 11 comprises a basic processing unit (BPU) 18 which is well known in the art.  The basic processing unit 18 includes a program control section and an arithmetic logical section so as to execute data processing.  A maintenance control processor 17 is coupled to the basic processing unit 18 directly and via an interface control section 19 and it is also coupled to an input/output processing unit (IOP) 12 via the interface control section 19. The maintenance control processor 17 receives from the basic processing unit 18 included in the CPU or from the service processor 13 macroscopic or collective commands, and interprets and executes these commands to directly control the basic processing unit 18 or the input/output processing unit 12 or to send command signals and command information to the service processor 13.

With the maintenance control processor 17, programs shared by the service processor 13 can be relieved and hence maintenance and diagnosis operations can be executed at high speeds. Since the service processor 13 communicates with the maintenance control processor 17 included in the CPU 11 through the medium of the collective commands on line 16, the amount of information required for communication therebetween can be reduced. This permits the distance between service processor 13 and CPU 11 to be prolonged.

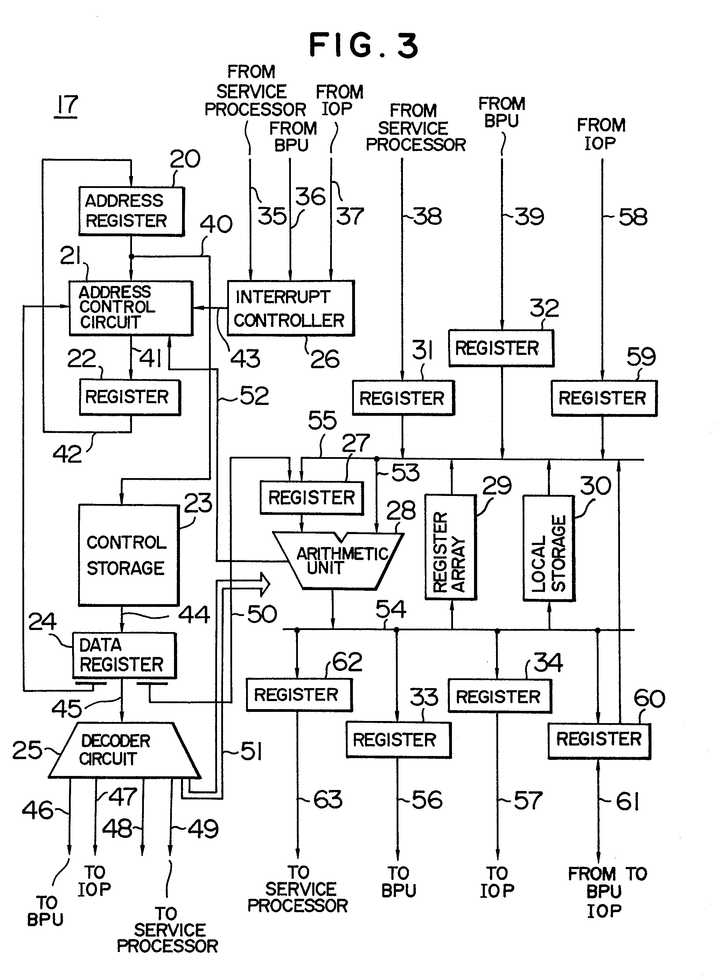

Fig. 3 shows details of the maintenance control processor 17 characteristic to the present invention. In Fig. 3, an address register 20, a register 22, an address control circuit 21 and an interrupt controller 26 constitute an address sytem logic of a microprogram for controlling the maintenance control processor. A control storage 23, a data register 24 and a decoder circuit 25 constitute a control storage system of the microprogram. A register 27, an arithmetic unit 28, a register array 29 and a local storage 30 constitute an operation system of the microprogram. Registers 31, 32 and 59 constitute a register system for input data supplied from outside to the maintenance control processor. Registers 33, 34 and 62 constitute a register system for data sent to outside from the maintenance control processor. A register 60 is used as a scan-in/scan-out register.

When the service processor 13 controls the basic processing unit 18 included in the CPU 11 or the input/ output processing unit 12, a predetermined command is provided by the service processor 13 onto a data line 38 and thereafter, an interrupt signal line 35 is rendered "1". In response to "1" of the interrupt signal line 35, the interrupt controller 26 generates a fixed address of a microprogram commensurate with an interrupt from the service processor 13. The fixed address is fed to the address control circuit 21 via a line 43 and set into the address register 20 via line 41, register 22 and line 42. Upon application of contents of the address register 20 to the control storage 23 via an address line 40, a micro- struction is read out of the control storage 23, set into the data register 24 via a data line 44 end eventually, fed via a line 45 to the decoder circuit 25 for decoding. The address control circuit 21 is then supplied with a next address designated by the microinstruction from the data register 24 and prepares a next address of the microprogram which in turn is set into the address register 20 via the register 22. A decoded output of the decoder circuit 25 is fed to the various registers and arithmetic unit shown in Fig. 3 via a bus 51 so that in accordance with designation by the microinstruction, selection of register, input/output of data and operation are carried out.

In this manner, the execution of the interrupt processing program issued from the service processor 13 and stored in the control storage 23 is initiated.   In this processing, after the command from the service processor 13 is set into the register 31, not only a test condition from the data register 24 is supplied to the arithmetic unit 28 via line 50 and register 27 but also the command set in the register 31 is supplied to the arithmetic unit 28 via bus 55 and line 53, so that the command is operated by the arithmetic unit 28 so as to be decoded (tested) and supplied to the address control circuit 21 via a line 52.   If this command is directed to the basic processing unit 18 included in the CPU 11, a microinstruction commensurate therewith is read out and a predetermined command code is set into the register 33 via a bus 54. The register 33 then sends an output data to the basic processing unit 18 via a line 56.   Concurrently, an interrupt signal line 46 coupled to the basic processing unit 18 is rendered "1", thus terminating the interrupt processing program issued from the service processor 13.

If the command is directed to the input/output processing unit 12, a predetermined command code is set into the register 34, an output data from the register 34 is sent to the input/output processing unit 12 via an an output data line 57, and an interrupt signal line 47 coupled to the input/output processing unit 12 is rendered "1", thus terminating the interrupt processing program issued from the service processor 13.

If the command is relevant to scan operations, scan-in/scan-out control is effected by means of the register 60 and a scan control signal line 48 in order to perform scan-in/scan-out processing directed to the CPU 11 or the input/output processing unit 12. A sequence control signal and bit serial signal necessary for the scan-in/scan-out operation can be collected into a data in unit of byte, and such a sophisticated controlling as necessary for generating a parity bit can be accomplished by using the microprogram of the maintenance control processor, thereby making it possible to relieve load shared by the service processor 13.

On the other hand, when the basic processing unit 18 or the input/output processing unit 12 issues a request, the same flow of program of the maintenance control processor 17 as that for the aforementioned interrupt processing by the service processor 13 is performed, except that a command is set into the register 32 via a line 39 and an interrupt signal line 36 is rendered "1" in the former case and that a command is set into the register 59 via a line 58 and an interrupt signal line 37 is rendered "1" in the latter case. When a request is directed to the service processor 13, a command is set into the register 62 and an interrupt signal line 49 coupled to the service processor 13 is rendered "1".

The register array 29 and local storage 30 are used for temporary storage of data handled by the microprogram of the maintenance control processor 17, and operation and decision of the data is executed by the arithmetic unit 28.

Taking scan-in/scan-out operation, for instance, the operation of the Fig. 3 arrangement will be described in greater detail. Respective bits of flip-flops constituting the CPU 11 or the input/output processing unit 12 are used for scan address allotment and a write/read operation directed to the respective bits can be accomplished by designating a scan address. Such a write/read operation is called scan-in/scan-out operation. This scan-in/scan-out operation is essential for the service processor 13 to execute micro-diagnosis of the CPU 11 or input/output processing unit 12, logout, register alternation or display, and is used repetitiously. Therefore, it is desired that the scan-in/scan-out operation be effected at high speeds. Further, paths for connection to all the flip-flops are to be independent of paths for the normal operation of the processor and hence, reduction in hardware for such connection paths is desired.

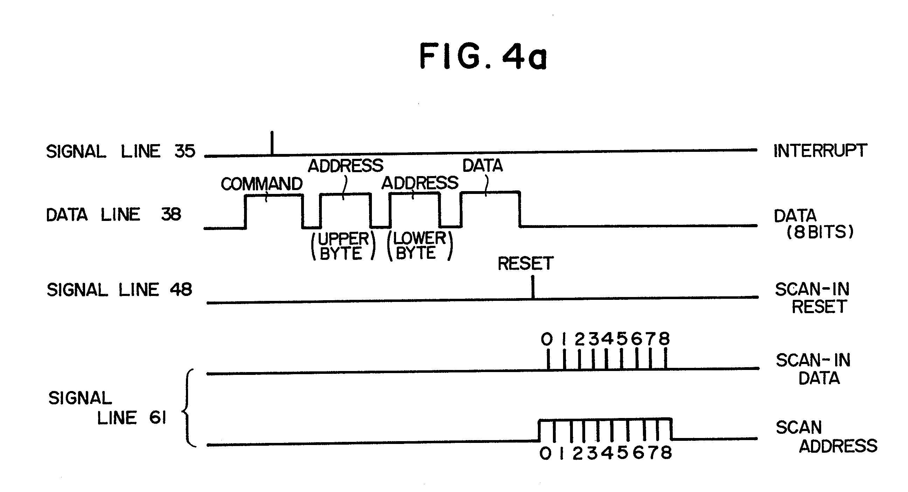

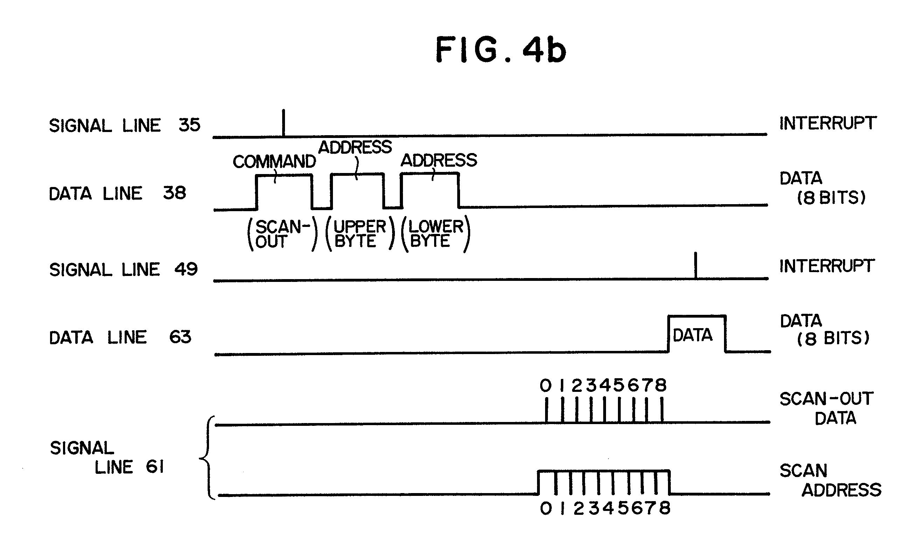

The maintenance control processor 17 plays an important role in satisfying the needs for high speed operation and hardware reduction. Thanks to the maintenance control processor 17, it can be assumed that data transfer between the service processor 13 and the maintenance control processor 17 included in the CPU 11 which are coupled through cables of a length in excess of a maximum of 100 meters is accomplished in unit of byte and that a scan interface between the maintenance control processor 17 and the CPU 11 as well as the input/output processing unit 12 is operated in unit of bit. Thus, in this case, the maintenance control processor 17 is so applied as to effect byte/bit conversion for the scan-in/scan-out operation and absorb the operation of the scan interface based on one-bit unit. This application will be described with reference to Figs. 4a and 4b.

Fig. 4a shows a scan-in operation. A scan-in command is issued from the service processor 13 onto the data line 38 and thereafter, the interrupt signal line 35 is rendered "1" by the processor 13 to instruct the maintenance control processor 17 of an interrupt. In response thereto, the execution of an interrupt processing program issued from the service processor 13 and stored in the control storage 23 included in the maintenance control processor 17 is initiated. In this processing, a command of the register 31 is tested through the arithmetic unit 28 and an address commensurate with the command is set into the address register 20. Specifically, in this case, a microprogram for scan-in is subsequently executed since the command designates a scan-in operation. In accordance with this microprogram, upper and lower bytes of the scan address and a scan-in data byte which occur on the service processor interface (data line 38) are first fetched by the register 31 and stored into the register array 29 via the bus 55 and arithmetic unit 28. Subsequently, the scan address is taken out of the register array 29, set into the register 60 via the bus 55, arithmetic unit 28 and bus 54, and eventually sent to the input/output processing unit 12 or the basic processing unit 18. In this procedure, lower three bits of the scan address are varied by the arithmetic unit corresponding to bits of the scan-in data and they are respectively set into the register 60. One byte of the scan-in data, on the other hand, is taken out of the register array 29. This scan-in data and the scan address data are alternately selected bit by bit by the arithmetic unit 28, and one selected bit of the scan-in data is sent to the register 60 and delivered to the scan interface (signal line 61) in alternate relationship with the scan address. With a register inclusive of a parity bit, an eighth bit is taken for a parity bit which is delivered out finally.

Fig. 4b shows a scan-out operation. The manner of sending the scan address in the scan-out operation is the same as that in the scan-in operation, except that an initial command on the service processor interface (data line 38) designates the scan-out and that the scan-in data is not required. On the scan interface (signal line 61), a scan-out data is read out of the input/output processing unit 12 or the basic processing unig 18 bit by bit on the time series and in alternate relationship with a scan address and inputted to the register 60. The respective bits thus inputted are merged at the arithmetic unit 28 into a byte which in turn is stored in the register array 29. One byte thus undergoes scan-out and is transferred from the register array 29 to the register 62 via the arithmetic unit 28 to ensure that after one byte data is set on the data line 63, the signal line 49 can be rendered "1" to interrupt the service processor 13.

In the foregoing examples, the scan address is of two bytes and the scan-in and scan-out data are of one byte but obviously, the byte number configuration may be variable and in addition, the contents to be processed by the maintenance control processor may be graded more highly than that in the previous examples. In such a modification, the operation follows the designation by the service processor 13, with the only exception that the command for scan-out is set into the register 32 via the data line 39.

In the illustrated embodiment, the service processor is a commercially available microprocessor in which one step of program is executed within 5 microseconds. The maintenance control processor 17, on the other hand, operates at a high speed which is about 100 times the speed of the service processor but it need not perform functionally high grade processing, thus having the total number of steps which is about 1/100 of that of the service processor. If the service processor 13 otherwise performs all the scan operations, about 500 microseconds per

0110413

byte would be required. But with the maintenance control processor 17, the execution time for this purpose can be reduced to about 5 microseconds.

As has been described, according to the present invention, the maintenance control operation which is executed by the service processor and logic circuits in the prior art system can be executed by a third processor (maintenance control processor) which is independent of the service processor so that it will do that the service processor merely sends a predetermined command alone. Consequently, the load on the service processor can be reduced and high-speed maintenance control operations can be reqlized. In addition, even when the interface cable length between the service processor and the CPU as well as the input/output processing unit is prolonged, performance of the system will not be degraded.

- 1 -     0110413

CLAIMS:

1.      A complex processor system comprising:

a central processing unit (11) including basic processing means (18) for execution of data processing;

a service processor (13) coupled to said central processing unit for controlling maintenance and diagnosis operations of said basic processing means; and

maintenance control processor means (17) coupled to said basic processing means and said service processor, said maintenance control processor means receiving a command from said service processor and information attendant on the command, decoding said command, and sending a command signal and said information to said basic processing means in accordance with said command.

2.      A complex processor system according to Claim 1, wherein said maintenance control processor means also receives a command from said basic processing means, decodes the command and sends a command signal to said service processor in accordance with said command.

3.      A complex processor system according to Claim 2, wherein said maintenance control processor means includes control storage means (23) for storage of microprograms to execute a microprogram commensurate with a command from said service processor or said basic processing means and to send said command signal and said information to said service processor or said basic processing means under the control of said microprogram.

# F I G. 1

PRIOR ART

# F I G. 2

2/4    0110413

FIG. 3

# FIG. 4a

SIGNAL LINE 35 — INTERRUPT

COMMAND    ADDRESS    ADDRESS    DATA

DATA LINE 38 — DATA (8 BITS)

(UPPER BYTE)  (LOWER BYTE)

RESET

SIGNAL LINE 48 — SCAN-IN RESET

0 1 2 3 4 5 6 7 8

SCAN-IN DATA

SIGNAL LINE 61

SCAN ADDRESS

0 1 2 3 4 5 6 7 8

0110413

# FIG. 4b

SIGNAL LINE 35 — INTERRUPT

DATA LINE 38 — DATA (8 BITS)
COMMAND / ADDRESS / ADDRESS
(SCAN-OUT) (UPPER BYTE) (LOWER BYTE)

SIGNAL LINE 49 — INTERRUPT

DATA LINE 63 — DATA (8 BITS) / DATA

SIGNAL LINE 61 — SCAN-OUT DATA 0 1 2 3 4 5 6 7 8 / SCAN ADDRESS 0 1 2 3 4 5 6 7 8

4/4

011 0413